# EUROPEAN PATENT APPLICATION

(11) **EP 4 641 783 A1**
(43) Date of publication of application: **29.10.2025**
(21) Application number: 25172240.1
(22) Date of filing: 24.04.2025
(51) Int. Cl.: H01M 50/147, H01M 50/342, H01M 50/107, H01M 50/152, H01M 50/179

(54) **BATTERY CELL AND MANUFACTURING METHOD THEREOF**

(30) Priority: 26.04.2024 KR 20240056321; 26.09.2024 KR 20240130934; 15.04.2025 KR 20250048851
(71) Applicant: SK On Co., Ltd., Seoul 03161 (KR)
(72) Inventor: CHEONG, Hoemin, 34124 Daejeon (KR); KWAK, Seung Ho, 34124 Daejeon (KR); CHOI, Yang Kyu, 34124 Daejeon (KR); JU, Seung Hoon, 34124 Daejeon (KR); PAK, Byeong Jun, 34124 Daejeon (KR); PARK, Seong Che, 34124 Daejeon (KR); LEE, Dong Hyee, 34124 Daejeon (KR)
(74) Representative: Stolmár & Partner Patentanwälte PartG mbB

(57) **Abstract**

A battery cell (100) according to an embodiment of the present disclosure includes a case receiving an electrode assembly, and an electrode terminal (130) electrically connected to the electrode assembly, wherein the case includes a vent portion (190) having a lower hardness than other regions of the case.

## Description

### BACKGROUND OF THE INVENTION

### 1. Field

The present disclosure relates to a battery cell and a method of manufacturing the same, and more specifically, to a battery cell having excellent stability and a method of manufacturing the same.

### 2. Description of the Related Art

Secondary batteries convert electrical energy into chemical energy and store the chemical energy so that the secondary batteries can be reused multiple times through charging and discharging. Secondary batteries are widely used throughout the industry due to their economical and eco-friendly characteristics. In particular, lithium secondary batteries are widely used throughout the industry, including portable devices that require high-density energy.

The operating principle of lithium secondary batteries is the electrochemical oxidation-reduction reaction. In other words, it is the principle that electricity is generated by the movement of lithium ions and is charged in the opposite process. In the case of lithium secondary batteries, the phenomenon in which lithium ions from the anode escape and move to the cathode through the electrolyte and the separator is called discharging. The opposite process of the phenomenon is called charging.

As the process of charging and discharging the secondary batteries is repeated, a swelling phenomenon may occur in which internal pressure increases and a large amount of heat is generated. Since this swelling phenomenon may lead to explosions or fires, measures to control the internal pressure of the secondary batteries are required.

### SUMMARY OF THE INVENTION

An aspect of the present disclosure is to provide a battery cell having excellent stability and a method of manufacturing the same.

An aspect of the present disclosure is to provide a battery cell with excellent stability by adjusting an internal pressure.

An aspect of the present disclosure is to provide a battery cell including a vent portion with a low breaking pressure that enables easy adjustment of an internal pressure.

Meanwhile, the battery cell according to the present disclosure can be widely applied to electric vehicles, battery charging stations, energy storage systems (ESS), and other green technology fields such as photovoltaics and wind power using batteries. In addition, battery assemblies according to the present disclosure may be used in eco-friendly mobility and the like, including electric vehicles and hybrid vehicles, to prevent climate change by suppressing air pollution and greenhouse gas emissions.

A battery cell according to embodiments of the present disclosure may include a case receiving an electrode assembly, and an electrode terminal electrically connected to the electrode assembly, wherein the case comprises a vent portion having a lower hardness than other regions of the case.

The vent portion may include a notch portion recessed in one surface of the case in a thickness direction.

The case may include a case body and a cap plate, and the case body may include an opening receiving the electrode assembly and an opposing surface facing the opening, and the cap plate covers the opening.

The electrode terminal may penetrate the opposing surface.

The vent portion may be formed in the opposing surface.

The vent portion may be formed in the cap plate.

The electrode terminal may penetrate the cap plate.

The vent portion may be formed in the cap plate.

The vent portion may have a thickness or a height smaller than a thickness or a height of an adjacent region.

The vent portion may be formed by performing heat treatment on an area of the case.

The vent portion may include a notch portion recessed from an outer surface of the case toward an inside of the case.

The vent portion may include a notch portion recessed from an inner surface of the case toward an outside of the case.

The notch portion may have a shape of a ring or a donut.

The vent portion may be spaced apart from the electrode terminal and surround the electrode terminal.

The vent portion may include an area at a distance of two to five times a width of a notch with respect to a center of the notch.

An insulating gasket may be arranged between the case and the electrode terminal, and the vent portion may have a lower hardness than a portion of the case which is in contact with the insulating gasket.

The case and the electrode terminal may have different polarities.

A method of manufacturing a battery cell according to embodiments of the present disclosure may include forming a vent portion by forming a region having a lower hardness than other regions of the case on one surface of the case.

The method may further include forming a notch portion recessed in one surface of the case in a thickness direction.

The forming the notch portion may be performed by press working, cutting, or laser etching.

The forming the vent portion may be performed by performing heat treatment on an area of the case.

The forming the vent portion may be performed by laser irradiation, ultrasonic induction heating, electromagnetic induction heating, or halogen lamp heating.

### BRIEF DESCRIPTION OF THE DRAWINGS

FIG. 1 is a perspective view schematically illustrating a battery cell according to an embodiment.
FIG. 2 is a cross-sectional view schematically illustrating a cross-section of a battery cell according to an embodiment.
FIG. 3 is an exploded perspective view schematically illustrating a battery cell according to an embodiment.
FIG. 4 is a perspective view schematically illustrating a battery cell according to another embodiment.
FIG. 5 is a cross-sectional view schematically illustrating a cross-section of a battery cell according to another embodiment.
FIG. 6 is an exploded perspective view schematically illustrating a battery cell according to another embodiment.
FIG. 7 is a partial cross-sectional view schematically showing a portion of a battery cell shown in FIG. 2.
FIGS. 8 to 12 are diagrams for describing a method of manufacturing a battery case according to an embodiment.

### DETAILED DESCRIPTION

Hereinafter, the present invention will be described in detail with reference to the accompanying drawing. However, those skilled in the art will appreciate that such embodiments described with reference to the accompanying drawing are provided to further understand the spirit of the present invention and do not limit subject matters to be protected as disclosed in the detailed description and appended claims.

Structural or functional descriptions of examples of embodiments in accordance with concepts which are disclosed in this specification are illustrated only to describe the examples of embodiments in accordance with the concepts and the examples of embodiments in accordance with the concepts may be carried out by various forms but the descriptions are not limited to the examples of embodiments described in this specification.

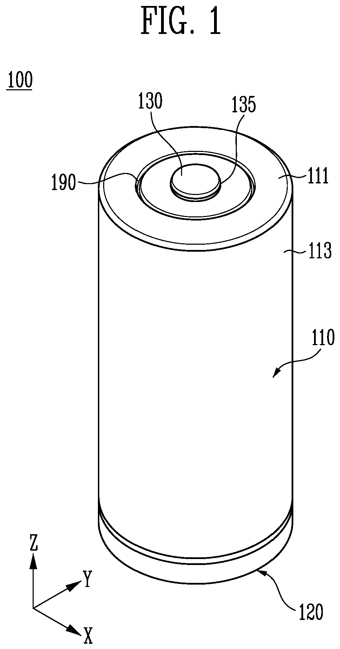

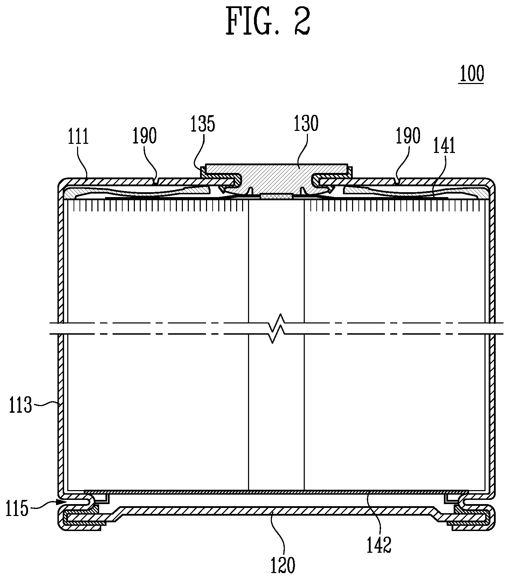

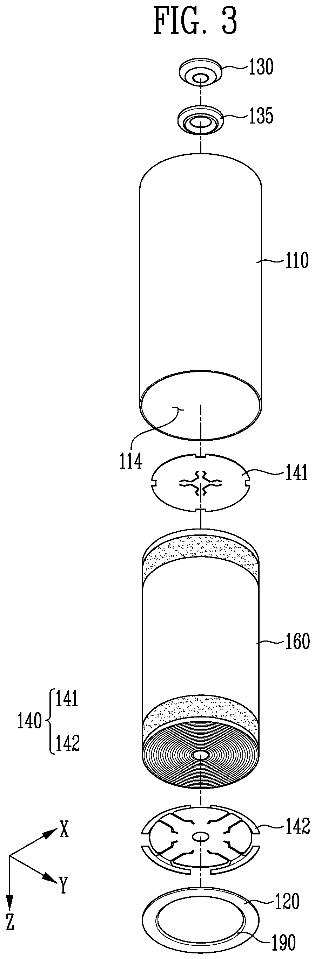

FIG. 1 is a perspective view schematically illustrating a battery cell 100 according to an embodiment. FIG. 2 is a cross-sectional view schematically illustrating a cross-section of the battery cell 100 according to the embodiment. FIG. 3 is an exploded perspective view schematically illustrating the battery cell 100 according the embodiment.

Referring to FIGS. 1 to 3, the battery cell 100 according to an embodiment of the present disclosure may include: a case 110, 120 receiving an electrode assembly 160; and an electrode terminal 130 electrically connected to the electrode assembly 160, in which the case 110, 120 may include a vent portion 190 having a lower hardness than other regions of the case 110,120.

In one embodiment, the case 110, 120 may include various metals such as iron, aluminum, or the like, alloys in which the metals are combined, plastics, ceramics, or carbon, or other materials. In one embodiment, the case 110, 120 may be carbon steel with a plated layer of Ni or Sn formed on the surface. In addition, the case 110, 120 may include hypoeutectoid steel with 0.8 wt% or less carbon content in one embodiment. Alternatively, the case 110, 120 may include stainless steel including Cr, etc.

In one embodiment, the electrode assembly 160 may include a separator and an electrode. In one embodiment, the battery cell 100 may further include an electrolyte. The electrolyte may be, for example, a medium which transfers ions or current between the anode and the cathode of the electrode assembly 160.

In an embodiment, the battery cell 100 may be a secondary battery which may be charged and discharged multiple times. For example, the secondary battery may be one of, but not limited to, a lithium cobalt battery, a lithium high nickel battery, a lithium iron phosphate battery, a lithium ion battery, a lithium polymer battery, a lithium sulfur battery, a nickel hydrogen battery, a nickel cadmium battery, a sodium battery, or an all-solid-state battery, and may be changed into various types of secondary batteries.

In one embodiment, the case 110, 120 includes a case body 110 and a cap plate 120, the case body 110 includes an opening 114 receiving the electrode assembly 160 and an opposing surface 111 facing the opening, and the cap plate 120 may cover the opening 114.

In an embodiment, the case body 110 may further include a side portion 113. The case 110, 120 may have the electrode assembly 160 inserted therein through the opening 114.

In one embodiment, the case body 110 may include the side portion 113, the opposing surface 111, and the opening 114.

In one embodiment, the case body 110 may have the shape of a container with an opened portion. The case body 110 may have a 'U' shape in which only one surface where the opening 114 is formed is opened. The opposing surface 111 may extend from one end (an upper end or a lower end) of the side portion 113. That is, the opposing surface 111 may be a closed cross-section, and as will be described below, in an embodiment, the vent portion 190 may be formed in the opposing surface 111.

The upper end and the lower end may be one of ends in a height direction (e.g., a Z-axis direction). For example, the opposing surface 111 may extend from the top of the side portion 113. In an embodiment, the opposing surface 111 may be arranged at the upper end of the case body 110, and the opening 114 may be arranged at the lower end thereof.

At least a portion of the opposing surface 111 may be formed as a flat surface with no height change in a horizontal direction (e.g., an X-axis direction or a Y-axis direction). In an embodiment, when the vent portion 190 is formed on the opposing surface 111, a region other than the vent portion 190 may be formed as a flat surface.

The opposing surface 111 may have may have a circular shape with respect to an XY plane. However, the present disclosure is not limited thereto, and the shape of the opposing surface 111 may be changed into an ellipse, a triangle, a rectangle, a polygon, or the like.

The side portion 113 may extend in the height direction (e.g., the Z-axis direction) at an edge of the opposing surface 111.

In one embodiment, the opposing surface 111 and the side portion 113 may be integrally formed. That is, the side portion 113 may be partially bent from the upper end or the lower end to form the opposing surface 111, which may be referred to as a closed section in this disclosure. The opposing surface 111 may include the same material as the side portion 113.

Alternatively, in an embodiment, the opposing surface 111 and the side portion 113 may be formed separately and joined by welding or the like.

The opening 114 may be formed on the opposite side of the opposing surface 111 in the height direction (e.g., the Z-axis direction).

For example, when the opposing surface 111 is formed at the upper end of the side portion 113, the opening 114 may be formed at the lower end of the side portion 113. The opening 114 allows the electrode assembly 160 to be inserted into the case body 110.

In one embodiment, the cap plate 120 may seal the case body 110. The cap plate 120 may be coupled to the case body 110 to close the opening 114.

In one embodiment, after the electrode assembly 160 is received in the case body 110, the cap plate 120 may be coupled to the case body 110. That is, the case body 110 and the cap plate 120 may surround the outside of the electrode assembly 160.

In one embodiment, the cap plate 120 and the case body 110 coupled to each other may have a cylindrical shape. However, this is only one embodiment, and the shape of the cap plate 120 and the case body 110 coupled to each other may be changed into various shapes such as a square or a hexahedron.

In one embodiment, the cap plate 120 may be located on the opposite side of the opposing surface 111. For example, when the opposing surface 111 is formed at the top of the side portion 113, the cap plate 120 may be coupled to the bottom of the side portion 114.

In an embodiment, a beading portion 115 may be formed on a side portion adjacent to the cap plate 120. The beading portion 115 may limit the movements of the electrode assembly 160 in the case. The beading portion 115 may prevent the electrode assembly 160 from being separated from the case body 110.

In an embodiment with reference to FIGS. 1 to 3, the beading portion 115 may also be in contact with a second current collector plate 142 to be described below. Accordingly, the beading portion 115 may restrict movements of the electrode assembly 160 and/or the second current collector plate 142 in the case. The beading portion 115 may prevent the electrode assembly 160 and/or the second current collector plate 142 from being separated from the case body 110.

However, the present invention is not limited thereto, and the beading portion 115 may be omitted in an embodiment.

In an embodiment, the battery cell 100 may include the case body 110, the cap plate 120, the electrode assembly 160, a current collector plate 140, the electrode terminal 130, and an insulating gasket 135.

In one embodiment, the electrode assembly 160 may include a first electrode, a second electrode, and a separator.

In an embodiment, the current collector plate 140 may include at least one of a first current collector plate 141 and the second current collector plate 142.

The current collector plate 140 may be electrically connected to an electrode of the electrode assembly 160. To this end, the current collector plate 140 may include a conductive material such as copper, gold, silver, or aluminum. The electrode may include a first electrode and a second electrode.

In one embodiment, the first current collector plate 141 and the second current collector plate 142 may be electrically connected to different electrodes of the electrode assembly 160. For example, the first current collector plate 141 may be connected to a first electrode, and the second current collector plate 142 may be connected to a second electrode.

In the embodiment with reference to FIGS. 1 to 3, the first current collector plate 141 may be arranged between the opposing surface 111 of the case body 110 and the electrode assembly 160. The second current collector plate 142 may be arranged between the cap plate 120 and the electrode assembly 160. The first current collector plate 141 may be electrically connected to the electrode terminal 130. The second current collector plate 142 may be electrically connected to the case body 110 and/or the cap plate 120.

The first current collector plate 141 may be arranged in the case body 110 between the opposing surface 111 and the electrode assembly 160. The first current collector plate 141 may be electrically connected to the first electrode of the electrode assembly 160.

The second current collector plate 142 may be arranged between the cap plate 120 and the electrode assembly 160 in the case body 110. The second current collector plate 142 may be electrically connected to the second electrode of the electrode assembly 160.

In one embodiment, the electrode terminal 130 may be electrically connected to the electrode assembly 160.

In an embodiment, the electrode terminal 130 may be connected to the current collector plate 140 and be exposed to the outside through the case 110, 120. The electrode terminal 130 may be electrically connected to an external device. That is, current may flow to the external device through the electrode terminal 130.

In one embodiment, the electrode terminal 130 may be inserted into a through hole formed in the case 110,120 and penetrate the case 110, 120 accordingly.

In one embodiment, the electrode terminal 130 may be a rivet.

Referring again to FIGS. 1 to 3, in one embodiment, the electrode terminal 130 may be positioned opposite the cap plate 120 in the height direction (e.g., the Z-axis direction). The electrode terminal 130 may be electrically connected to the current collector plate 140 and be exposed to the outside through the opposing surface 111.

In one embodiment, the through hole may be formed in the opposing surface 111 of the case body 110. For example, the through hole may be formed through the center of the opposing surface 111. The electrode terminal 130 may pass through the center of the opposing surface 111 and be exposed to the outside.

Referring again to FIGS. 1 to 3, in one embodiment, the insulating gasket 135 may be arranged between the case body 110 and the electrode terminal 130. For example, the insulating gasket 135 may be arranged between the opposing surface 111 of the case body 110 and the electrode terminal 130.

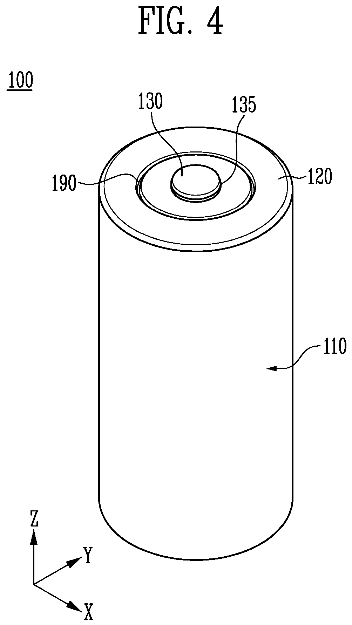

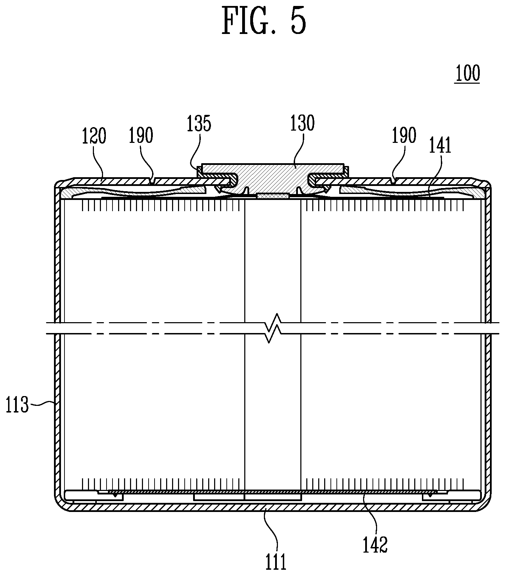

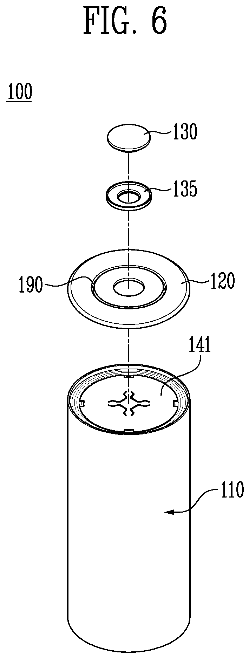

FIG. 4 is a perspective view schematically illustrating the battery cell 100 according to another embodiment. FIG. 5 is a cross-sectional view schematically illustrating a cross-section of the battery cell 100 according to another embodiment. FIG. 6 is an exploded perspective view schematically illustrating the battery cell 100 according to another embodiment.

Unlike the above-described embodiment in which the electrode terminal 130 is located on the opposite side to the cap plate 120 in the height direction as described with reference to FIGS. 1 to 3, the electrode terminal 130 may be located at the cap plate 120 side as shown in FIGS. 4 to 6.

In one embodiment, the electrode terminal 130 may penetrate the cap plate 120. That is, the electrode terminal 130 may be electrically connected to the current collector plate 140 and be exposed to the outside through the cap plate 120.

In one embodiment, the through hole may be formed in the cap plate 120. For example, the through hole may be formed through the center of the cap plate 120. The electrode terminal 130 may be exposed to the outside through the center of the cap plate 120.

In this embodiment, unlike the previous embodiment described with reference to FIGS. 1 to 3, the insulating gasket 135 may be arranged between the cap plate 120 and the electrode terminal 130.

Referring to FIGS. 4 to 6, unlike the embodiment described with reference to FIGS. 1 to 3, the first current collector plate 141 may be arranged between the cap plate 120 and the electrode assembly 160. The second current collector plate 142 may be arranged between the opposing surface 111 of the case body 110 and the electrode assembly 160.

In one embodiment, the electrode assembly 160 may be in the form of a wound roll. For example, the electrode assembly 160 may be wound along a central axis C with a first electrode, a second electrode and a separator stacked on top of each other. The central axis C may be the height direction (e.g., the Z-axis direction). For example, an outer separator, the first electrode, an inner separator, and a second electrode which are stacked on top of each other may be wound along the central axis C.

In addition, the electrode assembly 160 may be plate-shaped or prismatic but the present disclosure is not limited thereto.

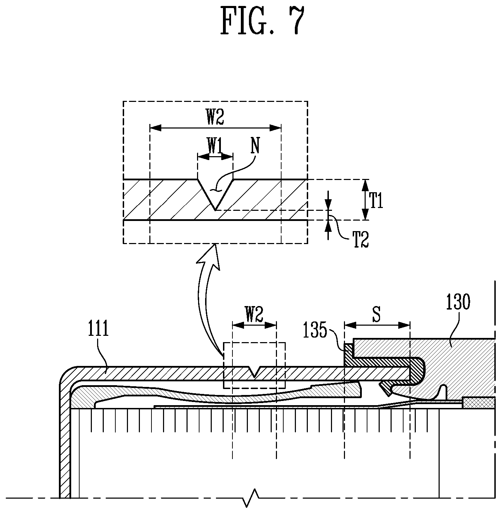

FIG. 7 is a partial cross-sectional view schematically showing a portion of the battery cell 100 shown in FIG. 2. The vent portion 190 according to an embodiment will be described in more detail with reference to FIG. 7.

Referring to FIGS. 1, 2, and 7, in an embodiment, the vent portion 190 may be formed in the opposing surface 111.

However, in a modified embodiment, the vent portion 190 may be formed in the cap plate 120 as shown in FIG. 3. In this modified embodiment, the electrode terminal 130 passes through the opposing surface 111 as in the structure shown in FIGS. 1, 2 and 7, but the vent portion 190 may be formed in the cap plate 120, not in the opposing surface 111.

In the above modified embodiment, the vent portion 190 may not be formed in the opposing surface 111. In the above modified embodiment, the vent portion 190 may be formed in the cap plate 120.

The vent portion 190 may have a smaller thickness or height than an adjacent region. In addition, the vent portion 190 may have a lower hardness than other regions of the case body 110. In addition, the vent portion 190 may have a lower hardness than an adjacent region. The vent portion 190 may be formed by performing heat treatment on an area of the case, which will be described below in more detail.

The shape of the vent portion 190 may be changed based on the internal pressure of the battery cell. When the internal pressure of the battery cell increases because the hardness of the vent portion 190 is lower than that of another adjacent region, the vent portion 190 may be deformed before the region adjacent to the vent portion 190.

At least a portion of the vent portion 190 may be opened when the internal pressure of the battery cell increases. The vent portion 190 may be partially broken when the internal pressure of the battery cell increases.

The vent portion 190 may include a notch portion which is recessed in one surface of the case in a thickness direction. A notch N having a predetermined depth (a notch depth=T1-T2) may be formed on one surface of the case in the thickness direction. The notch N may extend over a certain length to form a notch portion. The notch N may have a V-shaped cross-section as shown in FIG. 7. However, the present disclosure is not limited thereto, and the notch N may have various forms such as a U shape. The vent portion 190 may thus have a thickness T2 or a height T2 which is less than that of the adjacent region. The thickness T2 of the vent portion 190 may be a thickness T1 of the case minus the depth of the notch N.

In one embodiment, a notch portion may be formed on an outer surface of both surfaces of the case. The outer surface may refer to a surface on which the case faces the outside. The vent portion 190 may include a notch portion recessed to a predetermined depth from the outer surface of the case toward the inside of the case.

Alternatively, the notch portion may be formed on an inner surface of both surfaces of the case. The inner surface may be understood as a surface facing the inner space of the case. The vent portion 190 may include a notch portion recessed to a predetermined depth from the inner surface of the case toward the outside of the case.

Based on the embodiment described above with reference to FIGS. 1 and 2, the notch portion may be formed on an outer surface of both sides of the opposing surface 111, where the outer surface may refer to a surface of both sides of the opposing surface 111 which faces outward, and the vent portion 190 may include the notch portion which is recessed to a predetermined depth from the outer surface of the opposing surface 111 to the inside of the case.

Alternatively, the notch portion may be formed on the inner surface of both sides of the opposing surface 111, where the inner surface may refer to a surface facing the inner space of the case from both sides of the opposing surface 111, and the vent portion 190 may include the notch portion which is recessed to a predetermined depth from the inner surface of the opposing surface 111 toward the outside of the case.

In an embodiment, the notch N may extend over a certain length to form a notch portion, which may have the shape of a ring or a donut. In addition, the present disclosure is not limited thereto, and the notch N may have a rectangular shape or a polygonal shape.

The notch portion may have a continuous shape. Alternatively, the notch portion may be formed discontinuously.

The same descriptions about the vent portion 190 and the notch portion as above are applicable to the embodiment described with reference to FIGS. 4 to 6.

In this embodiment, the vent portion 190 may be formed in the cap plate 120.

In the modified embodiment described above with reference to FIG. 3, the vent portion 190 may be formed in the cap plate 120 in the same manner as in the embodiment described with reference to FIGS. 4 to 6. However, in the embodiment described with reference to FIGS. 4 to 6, the electrode terminal 130 may pass through the cap plate 120, unlike the modified embodiment described above.

The vent portion 190 may have a smaller thickness or height than that of an adjacent region, and the vent portion 190 may be have a less hardness than other regions of the cap plate 120.

In an embodiment, the notch portion may be formed on an outer surface of both surfaces of the cap plate 120, where the outer surface may mean an outer surface of both surfaces of the cab plate 120, and the vent portion 190 may include a notch portion which is recessed to a predetermined depth from the outer surface of the cab plates 120 toward the inside of the case.

Alternatively, the above-described notch portion may be formed on an inner surface of both surfaces of the cap plate 120, where the inner surface may refer to a surface facing the inner space of the case among both surfaces of the cap plate 120, and where the vent portion 190 may include a notch portion recessed to a predetermined depth from the inner surface of the cap plate 120 toward the outside of the case.

In an embodiment, the vent portion 190 may be formed in a region adjacent to a region through which the electrode terminal 130 passes in the case 110, 120.

Referring to FIGS. 1, 2, and 7, in one embodiment, the vent portion 190 may be formed in the opposing surface 111. In an embodiment, the vent portion 190 may be spaced apart from the electrode terminal 130 exposed to the outside on the opposing surface 111.

Alternatively, referring to FIGS. 4 to 6, in one embodiment, the vent portion 190 may be formed in the cap plate 120. In an embodiment, the vent portion 190 may be spaced apart from the electrode terminal 130 exposed to the outside from the cap plate 120.

In an embodiment, the vent portion 190 may have a longer circumference the electrode terminal 130 and surround the electrode terminal 130.

In one embodiment, the vent portion 190 may have a lower hardness than the other regions of the case. The lower hardness portion may be an area adjacent to the notch portion. In one embodiment, the area adjacent to the notch portion may be a region W2 which is two to five times a width W1 of the notch N with respect to the center of the notch portion. The width W1 of the notch N may be, for example, 0.3 mm to 1.5 mm but the present disclosure is not limited thereto. More specifically, the width W1 of the notch N may be 0.3 mm to 1.5 mm, or 0.5 mm to 1.5 mm. The hardness of the region W2 at a distance of two to five times the notch width W1 with respect to the center of the notch N is less than that of another region of the case, so that the battery cell may be easily broken when the internal pressure rises.

In the embodiment described with reference to FIGS. 1 to 3, the insulating gasket 135 may be arranged between the opposing surface 111 of the case body 110 and the electrode terminal 130. Alternatively, in the embodiment described with reference to FIGS. 4 to 6, the insulating gasket 135 may be arranged between the cap plate 120 and the electrode terminal 130.

More specifically, in the embodiment described with reference to FIGS. 1 and 2, the hardness of the vent portion 190 may be lower than the hardness of a portion S of the case which is in contact with the insulating gasket 135. For example, as shown in FIG. 7, the hardness of the vent portion 190 may be lower than the hardness of the portion S of the opposing surface 111 which is in contact with the insulating gasket 135, or though not shown, the hardness of the vent portion 190 may be lower than that of a portion of the cap plate which is in contact the insulating gasket 135. In addition, the length of the portion S where the case and the insulating gasket are in contact with each other may be, for example, 3.0 mm to 15 mm, but the present disclosure is not limited thereto.

Since the hardness of the vent portion 190 is lower than that of the portion S of the case which is in contact with the insulating gasket 135, the vent portion 190 may be induced to break before the portion S of the case which is in contact with the insulating gasket 135 at a set pressure.

In one embodiment, the position of the electrode terminal 130 may be changed when the internal pressure of the battery cell increases and at least a portion of the vent portion 190 is broken. In an embodiment, when the electrode terminal 130 is disconnected to release the electrical connection with the electrode assembly 160 at the same time as the vent portion 190 is broken, no additional energy supply may occur.

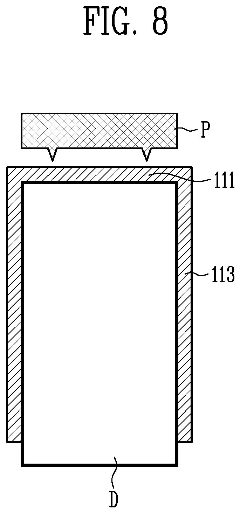

FIGS. 8 to 12 are diagrams for describing a method of manufacturing the battery cell 100 according to an embodiment. More specifically, a method of manufacturing the battery cell 100 according to the embodiment described with reference to FIGS. 1 and 2 will be described with reference to FIGS. 8 to 12.

The method of manufacturing the battery cell 100 according to an embodiment may include providing a vent portion by forming a region having a lower hardness than other regions of the case on one surface of the case.

In an embodiment, heat treatment may be used to perform the step of forming the region having the lower hardness than the other regions of the case on one surface of the case.

Further, in an embodiment, the manufacturing method may further include forming a notch portion recessed in one surface of the case in the thickness direction.

In an embodiment, the heat treatment may be performed after the notch portion is formed. Alternatively, forming the notch portion may be performed after the heat treatment.

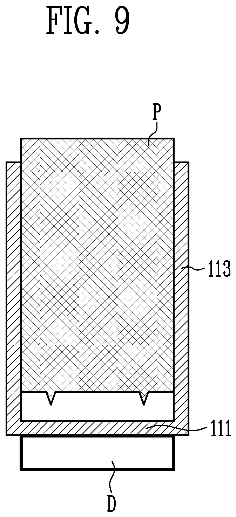

In an embodiment, forming the notch portion on the one surface of the case may be performed by press working. As shown in FIGS. 8 and 9, a case (specifically, a case body) may be arranged on a work die D, and the notch portion may be formed by pressing a punch P having a groove shape.

According to an embodiment, when the inner surface of the case is arranged to be in contact with the work die D as shown in FIG. 8, the notch portion may be formed on the outer surface of the case. In an embodiment, the notch portion may be formed on the opposing surface 111 of the case, and the notch portion may have a shape that the notch portion may be recessed toward the inside of the case from the opposing surface 111.

According to an embodiment, when the work die D is arranged so that the outer surface of the case may be in contact with the work die D as shown in FIG. 9, the notch portion may be formed on the inner surface of both surfaces of the case. In an embodiment, the notch may be formed on the opposing surface 111 of the case, and the notch portion may be recessed from the opposing surface 111 toward the outside of the case.

According to an embodiment, the notch portion may be formed by cutting.

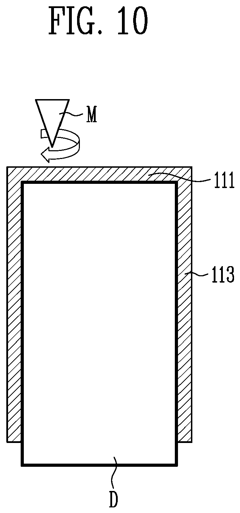

As shown in FIG. 10, a case may be arranged on the work die D, and the notch portion may be formed on the case using a rotary tool M. In one embodiment, CNC machining may be used.

As shown in FIG. 10, the inner surface of the case may be in contact with the work die D so that the notch portion may be formed on the outer surface of the case.

Alternatively, the notch portion may be formed on the inner surface of the case among both surfaces of the case by arranging the work die D so that the outer surface of the case may come into contact with the work die D.

According to an embodiment, the notch portion may be formed by a laser etch process.

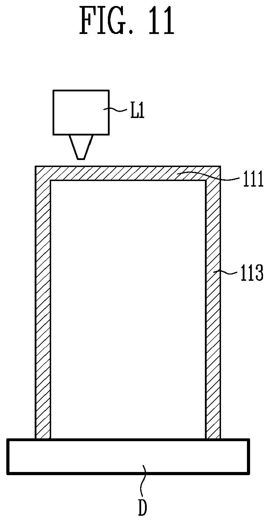

As shown in FIG. 11, the case may be placed on the work die D, and a laser L1 may be irradiated to form a notch portion in the case.

In one embodiment, a laser may be applied to the opposing surface 111 of the case to form a starting notch, and the laser may be applied so that the notch portion may form a ring shape at the starting notch. Also, the shape of the notch portion is not limited thereto. The notch portion may have a polygonal shape, and may be formed in a continuous or non-continuous shape.

According to an embodiment, when the notch portion is formed by the laser L1, the case may be processed without any physical contact. When the notch portion is formed through the laser L1, contamination and damage to the case caused by the contact may be prevented.

In an embodiment, a pulse width of the laser L1 used in the etch process may be different from that of a laser L2 used in a heat treatment process to be described below. Since the peak power is higher as the pulse width is shorter, the laser L1 used in the notch portion forming process may form the notch portion by minimizing the thermal effect on the case, and may prevent damage to the case.

The pulse width of the laser L1 may be ps, fs, ns, etc., and may be, for example, 10 ps to 500 ns, but the present disclosure is not limited thereto.

Also, the power of the laser L1 may be, for example, 10 W to 100 W, but the present disclosure is not limited thereto.

In addition, the speed of the laser L1 may be, for example, 10 mm/s to 200 mm/s, but the present disclosure is not limited thereto.

In an embodiment, a method of forming a region having a lower hardness than other regions of the case on one surface of the case may be performed by heat treatment. In an embodiment, the heat treatment may be performed through laser irradiation, ultrasonic induction heating, electromagnetic induction heating, or halogen lamp heating.

In an embodiment, a pulse width of the laser L2 used in the heat treatment may be different from that of a laser used in the etch process. The pulse width of the laser used in the heat treatment process may be greater than that of the laser used for the etch process.

In one embodiment, local heating may be performed using a continuous wave (CW) laser. The hardness of one area of the case may be changed by local heating.

When the entire case is subject to the heat treatment, the strength of the entire case may decrease. According to an embodiment of the present disclosure, only one region of the case may be subject to heat treatment to reduce the hardness of the vent portion without reducing the strength of the entire case.

In an embodiment, the hardness of the vent portion may be reduced by adjusting the heat treatment temperature and the cooling rate.

In one embodiment, the case may include various metals such as iron, aluminum, or the like, alloys in which these metals are combined, or materials such as plastic, ceramic, or carbon. In one embodiment, the case may include carbon steel with a plated layer of Ni or Sn formed on the surface. The case may also include hypoeutectoid steel with 0.8 wt% or less carbon content in one embodiment.

The hardness may be lowered by inducing a change in the structure of the case through heat treatment. The hardness may be lowered by adjusting the heating temperature range depending on the material of the case.

The heating temperature may be, for example, 500°C to 550°C, but the present disclosure is not limited thereto.

Also, the cooling rate may be, for example, 10°C/sec or less, but the present disclosure is not limited thereto.

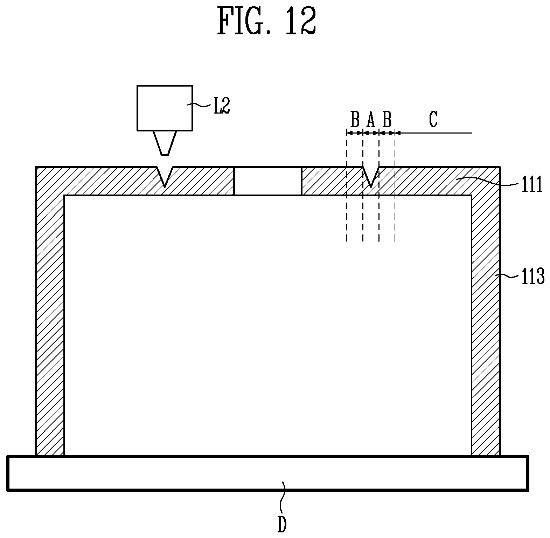

Referring to FIG. 12, local heating may be performed by irradiating a laser beam onto the portion where the notch portion is formed. More specifically, a portion (area A) where the notch portion is formed is at the highest temperature, and a temperature difference may occur in order of the next adjacent areas (an area B and an area C). By the local heating, the temperature in the area B adjacent to the portion A (area A) where the notch portion is formed may be lower than the temperature in the portion A (area A) where the notch portion is formed, and the temperature may not rise in the area C farthest from the portion A (area A) where the notch portion is formed. Accordingly, the hardness of the portion A (area A) where the notch portion is formed is the lowest, followed by the area B with the next lowest hardness. The area B is adjacent to the portion A (area A) where the notch portion is formed. The area C furthest from the portion A(area A) where the notch portion is formed may not change in hardness.

In an embodiment, the area B (W2) adjacent to the portion A (area A) where the notch portion is formed may be a region within two to five times the width W1 of the notch, and the region W2 at a distance of two to five times of the width W1 from the center of the notch may have a lower hardness than the periphery thereof.

More specifically, the hardness of the notch portion may be lower than that of the portion S of the case which is in contact with the insulating gasket 135.

In one embodiment, the electrode assembly 160 may be inserted into the case body after the vent portion 190 is formed.

More specifically, as shown in FIG. 2, the electrode assembly 160 may be inserted into the case body 110 through the opening 114 so that the first current collector plate 141 may face the opposing surface 111.

The electrode assembly 160 may be inserted into the case body 110 through the opening 114 so that the first current collector plate 141 may face the opposing surface 111.

In an embodiment, the first current collector plate 141 may be inserted into the case 110 before the second current collector plate 142. Subsequently, the electrode terminal 130 penetrating the opposing surface 111 may be electrically connected to the first current collector plate 141.

After the electrode assembly 160 is inserted into the case body 110, the cap plate 120 may be coupled to the case body 110 to close the opening 114.

### [Embodiment]

A battery case including hypoeutectoid steel with 0.8 wt% or less carbon content with a Ni-plated layer formed on a surface thereof was laser-etched to form a notch portion, and an area where the notch portion was formed was irradiated with a CW laser, locally heated, and then cooled. The heating temperature was set at 530°C, and the cooling rate was set at 10°C/sec. The hardness change was measured and listed in Table 1 below. In Table 1 below, an area A is a portion where the notch portion is formed, a portion adjacent to the area A is the area B, and a portion adjacent to the area B is the area C. The area C is farther away from the portion A where the notch portion was formed than the area B, which can be understood with reference to FIG. 12.

**[Table 1]**

| **Location** | **Hardness (HV)** | **Relative Value** |
|---|---|---|
| Area B | 125 | 0.7 |
| Area A | < 100 | < 0.55 |
| Area B | 125 | 0.7 |
| Area C | 180 | 1 |

Referring to Table 1 above, the hardness of the portion A (area A) where the notch portion was formed was the lowest, and the hardness of the area B adjacent to the portion A (area A) where the notch portion was formed was lower than that of the area C farthest from the portion A (area A) where the notch portion was formed.

An embodiment of the present disclosure may provide a battery cell with improved stability.

The battery cell according to an embodiment of the present disclosure may have improved stability by adjusting an internal pressure.

In the battery cell according to an embodiment of the present disclosure, the internal pressure may be adjusted by changing the shape of a vent portion.

According to an embodiment of the present disclosure, the vent portion may have a lower hardness than the portion where the electrode terminal is formed, and may be broken before the electrode terminal at a set pressure.

According to an embodiment of the present disclosure, when the vent portion is broken, the electrode terminal may be disconnected to release the electrical connection with the battery cell. Accordingly, no additional energy supply occurs to thereby reduce damage.

According to an embodiment of the present disclosure, one surface of the case in which the vent portion is formed is designed to face a vehicle floor, and damage can be minimized in a situation where the vent portion is broken.

According to an embodiment of the present disclosure, the hardness of only the portion where the vent portion is formed may be reduced without lowering the hardness of the entire case. Accordingly, the vent portion may be easily broken without lowering the overall strength of the case.

It is understood by those skilled in the art that the plurality of exemplary embodiments described above are specific examples of the following aspects.

Aspect 1: A battery cell comprising: a case receiving an electrode assembly; and an electrode terminal electrically connected to the electrode assembly, wherein the case comprises a vent portion having a lower hardness than other regions of the case.

Aspect 2: The battery cell according to Aspect 1, wherein the vent portion includes a notch portion recessed in one surface of the case in a thickness direction, preferably, the notch portion has a shape of a ring or a donut.

Aspect 3: The battery cell according to Aspect 1 or 2, wherein the case comprises a case body and a cap plate, and wherein the case body comprises an opening receiving the electrode assembly and an opposing surface facing the opening, and the cap plate covers the opening.

Aspect 4: The battery cell according to any one of Aspects 1 to 3, wherein the electrode terminal penetrates the opposing surface, preferably, the vent portion is formed in the opposing surface.

Aspect 5: The battery cell according to any one of Aspects 1 to 3, wherein the vent portion is formed in the cap plate.

Aspect 6: The battery cell according to any one of Aspects 1 to 3, wherein the electrode terminal penetrates the cap plate, preferably, the vent portion is formed in the cap plate.

Aspect 7: The battery cell according to any one of Aspects 1 to 6, wherein the vent portion has a thickness or a height smaller than a thickness or a height of an adjacent region.

Aspect 8: The battery cell according to any one of Aspects 1 to 7, wherein the vent portion is formed by performing heat treatment on an area of the case.

Aspect 9: The battery cell according to any one of Aspects 1 to 8, wherein (a) the vent portion comprises a notch portion recessed from an outer surface of the case toward an inside of the case, and/or (b) the vent portion includes a notch portion recessed from an inner surface of the case toward an outside of the case.

Aspect 10: The battery cell according to any one of Aspects 1 to 9, wherein the vent portion is spaced apart from the electrode terminal and surrounds the electrode terminal.

Aspect 11: The battery cell according to any one of Aspects 1 to 10, wherein the vent portion comprises an area at a distance of two to five times a width of a notch with respect to a center of the notch.

Aspect 12: The battery cell according to any one of Aspects 1 to 11, wherein (a) an insulating gasket is arranged between the case and the electrode terminal, and the vent portion has a lower hardness than a portion of the case which is in contact with the insulating gasket, and/or (b) wherein the case and the electrode terminal have different polarities.

Aspect 13: A method of manufacturing a battery cell, the method comprising: forming a vent portion by forming a region having a lower hardness than other regions of the case on one surface of the case.

Aspect 14: The method according to Aspect 13, further comprising forming a notch portion recessed in one surface of the case in a thickness direction, preferably, the forming the notch portion is performed by press working, cutting, or laser etching.

Aspect 15: The method according to Aspect 13, wherein the forming the vent portion is performed by performing heat treatment on an area of the case, preferably, the forming the vent portion is performed by laser irradiation, ultrasonic induction heating, electromagnetic induction heating, or halogen lamp heating.

This experimental example is provided as an embodiment, and various modifications and variations of the embodiment may be made within the scope and technical concept of the present disclosure.

The present disclosure may be modified and implemented in various forms, and its scope is not limited to the above-described embodiments. The content described above is merely an example of applying the principles of the present disclosure, and other features may be further included without departing from the scope of embodiments according to the present disclosure.

## Claims

1. A battery cell comprising:
a case receiving an electrode assembly; and
an electrode terminal electrically connected to the electrode assembly,
wherein the case comprises a vent portion having a lower hardness than other regions of the case.

2. The battery cell according to claim 1, wherein the vent portion includes a notch portion recessed in one surface of the case in a thickness direction, preferably, the notch portion has a shape of a ring or a donut.

3. The battery cell according to claim 1 or 2, wherein the case comprises a case body and a cap plate, and
wherein the case body comprises an opening receiving the electrode assembly and an opposing surface facing the opening, and the cap plate covers the opening.

4. The battery cell according to any one of claims 1 to 3, wherein the electrode terminal penetrates the opposing surface, preferably, the vent portion is formed in the opposing surface.

5. The battery cell according to any one of claims 1 to 3, wherein the vent portion is formed in the cap plate.

6. The battery cell according to any one of claims 1 to 3, wherein the electrode terminal penetrates the cap plate, preferably, the vent portion is formed in the cap plate.

7. The battery cell according to any one of claims 1 to 6, wherein the vent portion has a thickness or a height smaller than a thickness or a height of an adjacent region.

8. The battery cell according to any one of claims 1 to 7, wherein the vent portion is formed by performing heat treatment on an area of the case.

9. The battery cell according to any one of claims 1 to 8, wherein (a) the vent portion comprises a notch portion recessed from an outer surface of the case toward an inside of the case, and/or (b) the vent portion includes a notch portion recessed from an inner surface of the case toward an outside of the case.

10. The battery cell according to any one of claims 1 to 9, wherein the vent portion is spaced apart from the electrode terminal and surrounds the electrode terminal.

11. The battery cell according to any one of claims 1 to 10, wherein the vent portion comprises an area at a distance of two to five times a width of a notch with respect to a center of the notch.

12. The battery cell according to any one of claims 1 to 11, wherein (a) an insulating gasket is arranged between the case and the electrode terminal, and the vent portion has a lower hardness than a portion of the case which is in contact with the insulating gasket, and/or (b) wherein the case and the electrode terminal have different polarities.

13. A method of manufacturing a battery cell, the method comprising:
forming a vent portion by forming a region having a lower hardness than other regions of the case on one surface of the case.

14. The method according to claim 13, further comprising forming a notch portion recessed in one surface of the case in a thickness direction, preferably, the forming the notch portion is performed by press working, cutting, or laser etching.

15. The method according to claim 13, wherein the forming the vent portion is performed by performing heat treatment on an area of the case, preferably, the forming the vent portion is performed by laser irradiation, ultrasonic induction heating, electromagnetic induction heating, or halogen lamp heating.
